# EUROPEAN PATENT SPECIFICATION

(11) **EP 4 131 612 B1**
(45) Date of publication and mention of the grant of the patent: **04.12.2024**
(21) Application number: 21780643.9
(22) Date of filing: 20.01.2021
(51) Int. Cl.: H01M 50/30, H01M 50/159, H01M 50/264, H01M 50/367, H01M 50/278, H01M 10/44, H01M 50/20, H01M 50/249, H01M 50/50, H01M 50/276, H01M 50/291, H01M 50/289, H01M 50/358, H01M 50/209

(54) **POWER SUPPLY DEVICE, AND VEHICLE AND ELECTRICAL STORAGE DEVICE EACH EQUIPPED WITH SAME**
STROMVERSORGUNGSVORRICHTUNG SOWIE FAHRZEUG UND STROMSPEICHERVORRICHTUNG DAMIT
DISPOSITIF D'ALIMENTATION ÉLECTRIQUE AINSI QUE VÉHICULE ÉQUIPÉ DE CELUI-CI, ET DISPOSITIF DE STOCKAGE

(30) Priority: 31.03.2020 JP 2020064066
(43) Date of publication of application: 08.02.2023
(73) Proprietor: SANYO Electric Co., Ltd., Daito-shi Osaka 574-8534 (JP)
(72) Inventor: FUJII, Yusuke, Osaka-shi, Osaka 540-6207 (JP); TASHIRO, Yoshimitsu, Osaka-shi, Osaka 540-6207 (JP); EGASHIRA, Takuya, Osaka-shi, Osaka 540-6207 (JP)
(74) Representative: Novagraaf International SA
(86) International application number: PCT/JP2021/001787
(87) International publication number: WO 2021/199595

(56) References cited:
- EP-B1- 2 475 028
- JP-A- 2011 100 699
- JP-A- 2013 218 790
- JP-A- 2015 133 169
- JP-A- 2015 138 673
- JP-A- 2018 073 560

## Description

### TECHNICAL FIELD

The present disclosure relates to a power supply device, and vehicle and an electrical storage device each equipped with the same.

### BACKGROUND ART

A power supply device such as a battery module or a battery pack including a plurality of battery cells is used as a power source for a vehicle such as a hybrid vehicle or an electric car, a power source for a power storage system for a factory, a home, or the like (see PTL 1, for example).

A battery cell constituting such a power supply device is provided with a gas discharge valve that opens to release gas when the pressure inside of the outer covering can becomes high at the time of abnormality. When the pressure of the inside becomes high for some reason such as thermal runaway in any battery cell, high-temperature, high-pressure gas is released from the gas discharge valve.

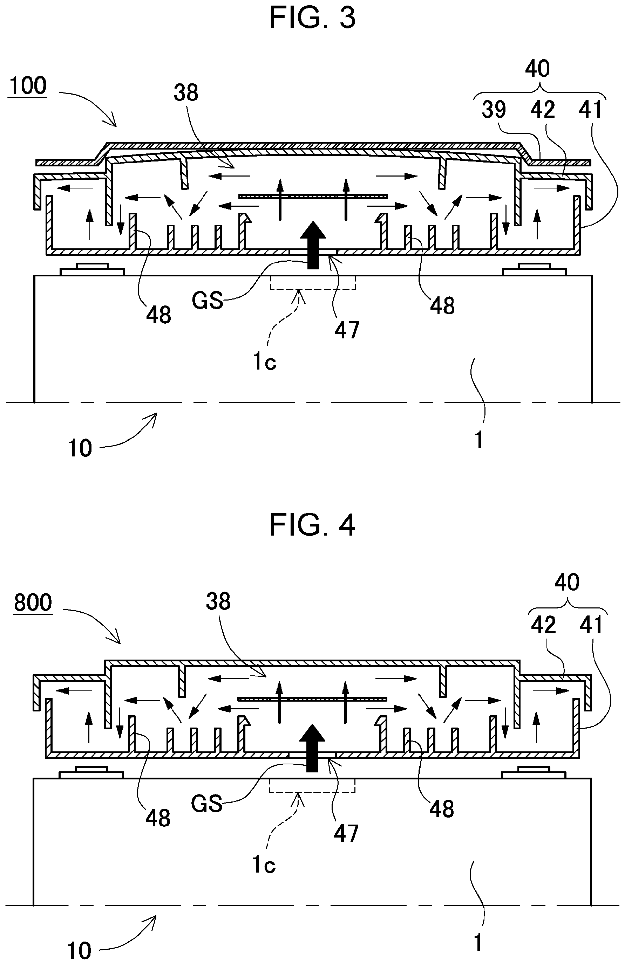

In order to prevent such a situation, a configuration in which a baffle plate is provided in a gas duct as shown in a transverse sectional view of Fig. 4 has been proposed. According to this structure, by bending the gas discharge path, it becomes possible to reduce the momentum and also lower the temperature to safely discharge the gas to the outside.

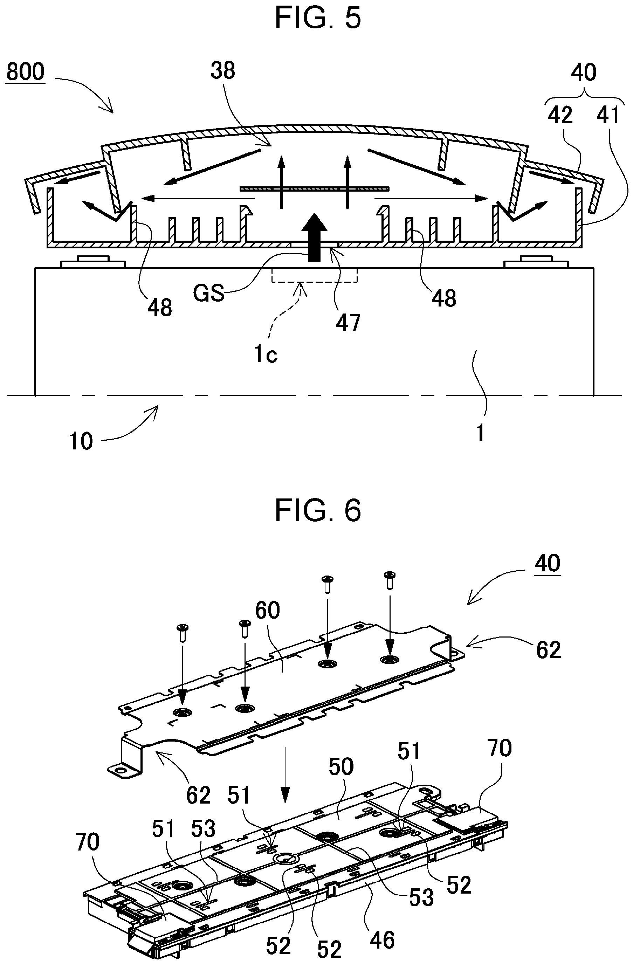

However, since the pressure of the gas is high, as shown in the transverse sectional view of Fig. 5, as a result of the duct being deformed by the gas pressure, a gas discharge path avoiding the baffle plate is formed, and there has been a possibility that the gas is discharged to the outside of the power supply device while being at a high pressure and temperature.

### Citation List

### Patent Literature

Patent literature EP2475028 discloses a battery module including a release mechanism for releasing a gas from a battery to outside the case with a flat plate that allows the gases released from the cells to go through the flat plate and pass through the duct formed between the flat plate and the partition. Patent literature JP2018073560 discloses a power supply apparatus with a plurality of battery blocks and an exhaust duct which includes opening windows at a position facing the battery block side opening window. Furthermore, there is a foreign matter movement preventing piece on the path of the exhaust duct which prevents the movement of foreign matter while still allowing the gas to be discharged through the exhaust duct.

### SUMMARY OF THE INVENTION

The object of the present invention is to provide a power supply device capable of safely discharging gas to the outside when the gas is discharged from a battery cell, a vehicle and an electrical storage device equipped with power supply device.

A power supply device according to the present invention includes: a battery stack in which a plurality of battery cells are stacked, each battery cell having a gas discharge valve that opens when an internal pressure of an outer covering can rises and an electrode terminal formed on an upper surface; a first cover that is provided on an upper surface of the battery stack and opens at a position corresponding to the gas discharge valve; and a second cover that is provided on an upper surface of the first cover and defines a gas duct with the first cover, in which the gas duct forms a baffle plate between the first cover and a second cover, and the power supply device further includes a metallic third cover that is provided on an upper surface of the second cover and abuts on an upper surface of the second cover.

According to a power supply device according to the present invention, even if a high-temperature, high-pressure gas is discharged from a gas discharge valve, by reinforcing the upper surface of the second cover with the metallic third cover, it is possible to suppress deformation of the second cover, and avoid a situation in which an unintended gas discharge path avoiding a baffle plate is formed.

### BRIEF DESCRIPTION OF THE DRAWINGS

Fig. 1 is a perspective view showing a power supply device according to a first exemplary embodiment of the present invention.
Fig. 2 is an exploded perspective view of the power supply device shown in Fig. 1.
Fig. 3 is an enlarged schematic sectional view showing a gas duct part of the power supply device according to the first exemplary embodiment.
Fig. 4 is a transverse sectional view of a power supply device showing a conventional outer edge prevention structure.
Fig. 5 is a transverse sectional view showing a state in which gas is discharged in the power supply device of Fig. 4.
Fig. 6 is an exploded perspective view showing a state in which a reinforcement cover is removed from a cover assembly of Fig. 2.
Fig. 7 is an exploded perspective view of Fig. 6.
Fig. 8 is an exploded perspective view of Fig. 7 as viewed obliquely from below.
Fig. 9 is an exploded perspective view showing a state in which a reinforcement cover is removed from the power supply device of Fig. 1.
Fig. 10 is a plan view of the power supply device of Fig. 1 with the reinforcement cover in a transparent state.
Fig. 11 is a sectional view with an enlarged view of a main part taken along line X-X in Fig. 10.
Fig. 12 is an enlarged schematic sectional view showing a gas duct part of the power supply device not provided with a communication rib.
Fig. 13 is an enlarged schematic sectional view showing a gas duct part of the power supply device provided with a communication rib.
Fig. 14 is a perspective view showing a power supply device according to a second exemplary embodiment of the present invention.
Fig. 15 is a block diagram showing an example of equipping a power supply device on a hybrid vehicle that is driven by an engine and a motor.
Fig. 16 is a block diagram showing an example of equipping a power supply device on an electric car that is driven only by a motor.
Fig. 17 is a block diagram showing an example of application to a power supply device for power storage.

### DESCRIPTION OF EMBODIMENT

Exemplary embodiments of the present invention may be specified by the following configurations.

A power supply device according to an exemplary embodiment of the present invention further includes, in addition to the above configuration, an end plate that covers a side surface of the battery stack, and the third cover is fixed to the end plate. The above configuration makes it possible to firmly fix the third cover to the power supply device using the end plate, and the third cover can prevent deformation of the second cover.

In a power supply device according to another exemplary embodiment of the present invention, in addition to any of the configurations described above, the battery stack includes a pair of fastening members that fasten the end plates to each other on both side surfaces of the battery stack, and the battery stack fastens the plurality of battery cells by the pair of fastening members and a third cover on an upper surface. With the above configuration, in addition to the fastening member that fastens the plurality of battery cells in a stack state, the third cover on the upper surface can also maintain the fastened state, and therefore the fastened state of the battery stack can be maintained more firmly by using the third cover also as a fastening member.

A power supply device according to another exemplary embodiment of the present invention further includes, in addition to any of the configurations described above, a bus bar that connects electrode terminals of the battery cells constituting the battery stack; and a total terminal strip that is connected to the bus bar, in which the third cover forms an exposure part that exposes the total terminal strip. With the above configuration, it is possible to secure the insulation distance by separating from the total terminal strip while using the metallic third cover, and to avoid the possibility of occurrence of an unintended short circuit.

Furthermore, in a power supply device according to another exemplary embodiment of the present invention, in addition to any of the configurations described above, the third cover forms a bead. With the above configuration, the strength can be improved by simple processing of forming a bead on the third cover.

Furthermore, in a power supply device according to another exemplary embodiment of the present invention, in addition to any of the configurations described above, the first cover and the second cover are made of resin.

An electric vehicle according to another exemplary embodiment of the present invention includes any of the above power supply devices, a motor for travelling to which the power supply device supplies electric power, a vehicle body equipped with the power supply device and the motor, and a wheel driven by the motor to cause the vehicle body to travel.

Furthermore, an electrical storage device according to another exemplary embodiment of the present invention includes any of the above power supply devices and a power supply controller that controls charging and discharging of the power supply device, in which the power supply controller enables charging of the plurality of battery cells with electric power from outside, and controls charging to be performed on the plurality of battery cells.

Exemplary embodiments of the present invention will be described with reference to the drawings. However, the exemplary embodiments described below are examples for embodying the technical idea of the present invention, and the present invention is not limited to the following. In the present description, members indicated in the claims are not specified at all to the members of the exemplary embodiments. In particular, the dimensions, materials, shapes, and relative arrangement of the constituent members described in the exemplary embodiments are not intended to limit the scope of the present invention only thereto unless otherwise specified and are merely illustrative examples. The sizes and positional relationships of the members shown in the drawings may be exaggerated for clarity of description. In the following description, the same names and reference marks indicate the same or similar members, and detailed description will be appropriately omitted. The elements constituting the present invention may be configured such that the plurality of elements are constituted of the same members to form one member that functions as a plurality of elements, or conversely, the function of one member can be shared and achieved by a plurality of members. The description in some examples or exemplary embodiments may be applied to other examples, exemplary embodiments, and the like.

The power supply device according to the exemplary embodiments is used in various applications including a power source to be equipped on a hybrid vehicle, an electric car, or other electric vehicles to supply electric power to a drive motor, a power source that stores power generated by natural energy such as solar power generation and wind power generation, and a power source for storing midnight electric power, and in particular, used as a power source suitable for large-power, large-current applications. In the following example, the exemplary embodiments applied to a power supply device for driving an electric vehicle will be described.

### [First exemplary embodiment]

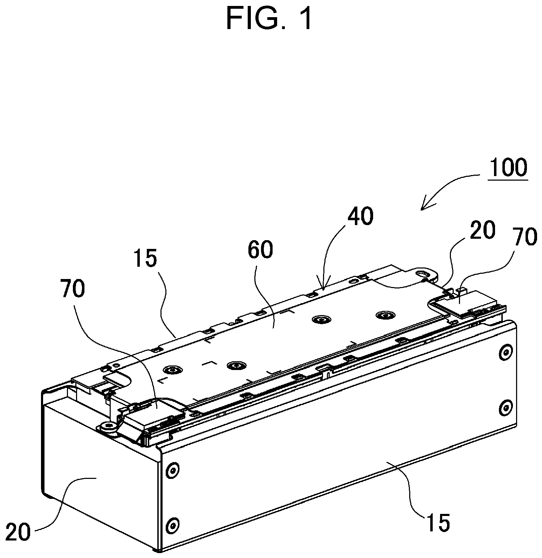

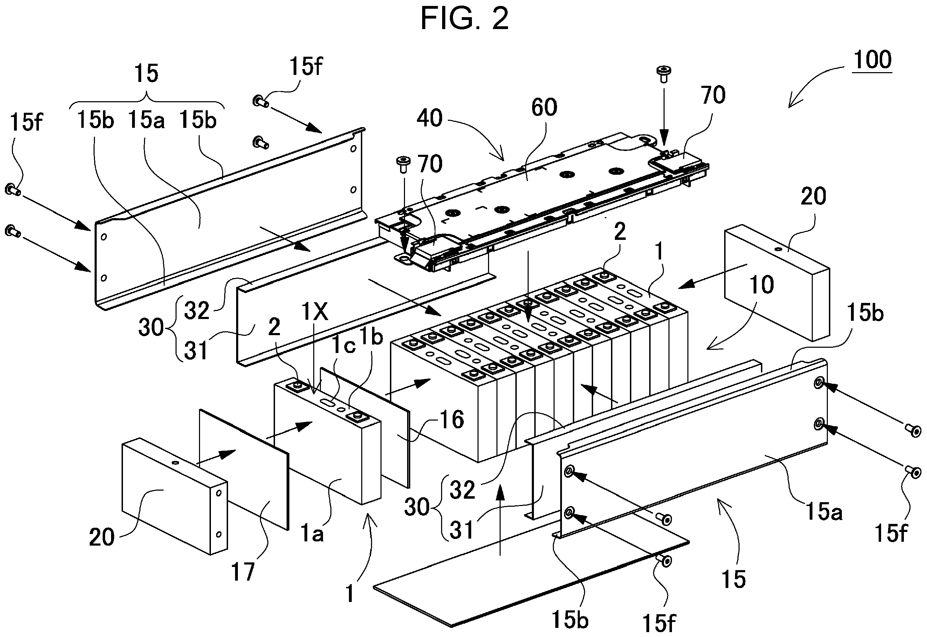

Power supply device 100 according to the first exemplary embodiment of the present invention is shown in Figs. 1 and 2. In these figures, Fig. 1 is an exploded perspective view of power supply device 100 according to the first exemplary embodiment, and Fig. 2 is an exploded perspective view of power supply device 100 shown in Fig. 1.

Power supply device 100 shown in these figures includes battery stack 10 in which the plurality of battery cells 1 are stacked, a pair of end plates 20 covering both side end surfaces of battery stack 10, a plurality of fastening members 15 for fastening end plates 20 to each other, and cover assembly 40 provided on an upper surface of battery stack 10.

Fastening member 15 is formed into a plate shape extending in a stack direction of the plurality of battery cells 1. Fastening members 15 are arranged on opposite side surfaces of battery stack 10 to fasten end plates 20 to each other.

### (Battery stack 10)

As shown in Fig. 2, battery stack 10 includes the plurality of battery cells 1 each including positive and negative electrode terminals 2, and bus bars connected to electrode terminals 2 of the plurality of battery cells 1 to connect the plurality of battery cells 1 in parallel and in series. The plurality of battery cells 1 are connected in parallel and in series through the bus bars. Battery cells 1 are chargeable and dischargeable secondary batteries. Power supply device 100 includes the plurality of battery cells 1 connected in parallel to form a parallel battery group, and a plurality of parallel battery groups are connected in series to allow many battery cells 1 to be connected in parallel and in series. In power supply device 100 shown in Fig. 2, the plurality of battery cells 1 are stacked to form battery stack 10. The pair of end plates 20 are arranged on both end surfaces of battery stack 10. Ends of fastening members 15 are fixed to end plates 20 to fix, in a state of being pressurized, battery cells 1 in the stack state.

### (Battery cell 1)

As shown in Fig. 2, battery cell 1 are each a prismatic battery having a width larger than the thickness, in other words, a width smaller than the width, and are stacked in the thickness to form battery stack 10. Battery cell 1 can be, for example, a lithium ion secondary battery. The battery cell can be any chargeable secondary battery such as a nickel hydride battery and a nickel cadmium battery. Battery cell 1 houses positive and negative electrode plates in outer covering can 1a having a sealed structure together with an electrolyte solution. Outer covering can 1a includes a metal sheet such as aluminum or an aluminum alloy press-molded into a prismatic shape, and has an opening that is hermetically sealed with sealing plate 1b. Sealing plate 1b is made of the aluminum or aluminum alloy same as prismatic outer covering can 1a, and positive and negative electrode terminals 2 are fixed to both ends of sealing plate 1b. Sealing plate 1b is provided with, between positive and negative electrode terminals 2, gas discharge valve 1c, which is a safety valve that opens in response to a change in pressure inside each battery cell 1.

The plurality of battery cells 1 are stacked such that the thickness direction of each battery cell 1 is the stack direction to constitute battery stack 10. At this time, the output of battery stack 10 can be increased by making the number of stack layers larger than usual. In such a case, battery stack 10 becomes long by being extended in the stack direction. In battery cell 1, terminal surfaces 1X provided with positive and negative electrode terminals 2 are arranged on the same plane, and the plurality of battery cells 1 are stacked to be battery stack 10. Then, an upper surface of battery stack 10 is a surface provided with gas discharge valves 1c of the plurality of battery cells 1.

### (Electrode terminal 2)

In battery cell 1, as shown in Fig. 2 and the like, with sealing plate 1b, which is a top surface, as terminal surface 1X, positive and negative electrode terminals 2 are fixed to both ends of terminal surface 1X. Electrode terminal 2 has a protrusion having a circular columnar shape. However, the protrusion is not necessarily in a circular columnar shape, and can be in a polygonal columnar shape or an elliptic columnar shape.

Positive and negative electrode terminals 2 fixed to sealing plate 1b of battery cell 1 are positioned where the positive electrode and the negative electrode become bilaterally symmetrical. Consequently, as shown in Fig. 2, battery cells 1 are horizontally flipped and stacked, and electrode terminals 2 of a positive electrode and a negative electrode that are adjacently close to each other are connected by a bus bar, so that adjacent battery cells 1 can be connected in series. Note that the present invention does not specify the number and connection state of the battery cells constituting the battery stack. The number and connection state of the battery cells constituting the battery stack may be modified in various manners, inclusive of other exemplary embodiments described later.

The plurality of battery cells 1 are stacked such that the thickness of each battery cell 1 aligns with the stack direction to constitute battery stack 10. In battery stack 10, the plurality of battery cells 1 are stacked such that terminal surface 1X provided with positive and negative electrode terminals 2 and sealing plate 1b in Fig. 2 become flush with each other.

In battery stack 10, insulating spacer 16 may be interposed between battery cells 1 stacked adjacently to each other. Insulating spacer 16 is produced in the form of a thin plate or sheet with an insulating material such as resin. Insulating spacer 16 has a plate shape that is substantially equal in size to an opposed face of battery cell 1. Such insulating spacer 16 can be stacked between battery cells 1 adjacent to each other to insulate adjacent battery cells 1 from each other. As a spacer arranged between adjacent battery cells, it is possible to use a spacer having a shape in which a flow path for a cooling gas is formed between the battery cell and the spacer. It is also possible to cover a surface of battery cell 1 with an insulating material. For example, the surface of the outer covering can excluding the electrode terminal part of the battery cell may be covered with a shrink film such as a PET resin. In this case, the insulating spacer may be omitted. Although a power supply device including a large number of battery cells connected in parallel and series includes an insulating spacer interposed between battery cells connected in series to each other, no voltage difference occurs between adjacent outer covering cans in battery cells connected in parallel to each other, and therefore the insulating spacer between these battery cells can be eliminated.

Power supply device 100 shown in Fig. 2 includes end plates 20 arranged on both end surfaces of battery stack 10. Between end plate 20 and battery stack 10, end surface spacer 17 may be interposed to insulate them. End surface spacer 17 can also be produced in the form of a thin plate or sheet with an insulating material such as resin.

In power supply device 100 according to the first exemplary embodiment, in battery stack 10 in which the plurality of battery cells 1 are stacked on each other, electrode terminals 2 of the plurality of battery cells 1 adjacent to each other are connected by the bus bar to connect the plurality of battery cells 1 in parallel and in series. A bus bar holder may be disposed between battery stack 10 and the bus bar. Use of the bus bar holder allows the plurality of bus bars to be arranged at fixed positions on the upper surface of the battery stack while insulating the plurality of bus bars from each other and insulating terminal surface 1X of the battery cell and the bus bar. Cover assembly 40 described later may be integrated with the bus bar holder.

The bus bar is manufactured into a predetermined shape by cutting and processing a metal sheet. As the metal sheet configuring the bus bar, metal that is low in electrical resistance and light in weight, such as an aluminum sheet, a copper sheet, or an alloy of these metals can be used. However, as the metal sheet for the bus bar, other types of metal that are low in electrical resistance and light in weight or an alloy of them can be used.

### (End plate 20)

As shown in Fig. 2, end plates 20 are arranged at both ends of battery stack 10 and fastened via the pair of right and left fastening members 15 arranged along the both side surfaces of battery stack 10. End plates 20 are arranged at both ends of battery stack 10 in the stack direction of battery cells 1 and outside end surface spacer 17 to sandwich battery stack 10 from both ends.

### (Fastening member 15)

Fastening member 15 has both ends fixed to end plates 20 arranged on both end surfaces of battery stack 10. End plates 20 are fixed by the plurality of fastening members 15 to fasten battery stack 10 in the stack direction. As shown in Fig. 2 and the like, each fastening member 15 is made of metal having a predetermined width and a predetermined thickness along the side surface of battery stack 10, and is arranged opposite to both side surfaces of battery stack 10. A metal sheet of iron or the like, preferably a steel sheet, can be used as fastening member 15. Fastening member 15 made of a metal sheet is bent by press molding or the like to be formed into a predetermined shape.

Fastening member 15 has an upper and lower parts of plate-shaped fastening main surface 15a bent in a U-shape to form bent pieces 15b. Upper and lower bent pieces 15b cover upper and lower surfaces of battery stack 10 from the corners on the right and left side surfaces of battery stack 10. Fastening member 15 is fixed to an outer peripheral surface of end plate 20 by screwing bolts 15f into a plurality of screw holes opened in fastening main surface 15a. Fastening main surface 15a and end plate 20 are not necessarily fixed by screwing with bolts, and may be fixed with pins, rivets, or the like.

Power supply device 100 having a large number of battery cells 1 stacked is configured such that the plurality of battery cells 1 are constrained by coupling, by means of fastening members 15, end plates 20 arranged at the both ends of battery stack 10 including the plurality of battery cells 1. By constraining the plurality of battery cells 1 via end plates 20 and fastening members 15 that have high rigidity, it is possible to suppress malfunction or the like caused by swelling, deformation, relative displacement, or vibration of battery cells 1 due to charging and discharging or degradation.

### (Insulating sheet 30)

Insulating sheet 30 is interposed between fastening member 15 and battery stack 10. Insulating sheet 30 is made of a material having insulating properties, such as a resin or the like, and insulates between fastening member 15 made of metal and the battery cells. Insulating sheet 30 shown in Fig. 2 and the like includes flat plate 31 covering the side surface of battery stack 10, and bent covered part 32 provided on each of an upper part and a lower part of flat plate 31. Bent covered parts 32 are each bent from flat plate 31 in a U-shape and folded so as to cover bent pieces 15b of fastening member 15. Due to this, by being covered with the insulating bent covered part from the upper surface to the side surface and the lower surface, bent piece 15b can avoid unintended conduction between battery cell 1 and fastening member 15.

Bent piece 15b presses the upper surfaces and the lower surfaces of battery cells 1 of battery stack 10 via bent covered part 32. This enables each battery cell 1 to be held in the height direction by being pressed by bent piece 15b in the up-down direction, and each battery cell 1 to be maintained so as not to be displaced in the up-down direction even if vibration, impact, or the like is applied to battery stack 10.

The insulating sheet can be unnecessary in a case where the battery stack and the surface of the battery stack are insulated, for example, in a case where the battery cells are housed in an insulating case or covered with a heat-shrinkable film made of resin, in a case where an insulating paint or coating is applied to the surface of the fastening member, or in a case where the fastening member is made of an insulating material. Insulating sheet 30 may also have bent covered part 32 formed only on the upper end in a case where insulation from bent piece 15b of fastening member 15 near the lower surface of battery stack 10 does not need to be taken into consideration. This applies to, for example, a case where battery cells 1 are covered with a heat-shrinkable film. Insulating sheet 30 may also be configured to serve as the bus bar holder holding the bus bar described above.

### (Cover assembly 40)

Power supply device 100 is provided with cover assembly 40 on the upper surface of battery stack 10. Cover assembly 40 configures a gas discharge path for discharging a high-temperature, high-pressure gas to the outside of power supply device 100 when this gas is discharged from any of battery cells 1 constituting battery stack 10. Note that cover assembly 40 may also be configured to serve as a bus bar holder that holds the bus bar.

As shown in the schematic sectional view of Fig. 3, cover assembly 40 includes first cover 41, second cover 42, and third cover 39. First cover 41 is provided on the upper surface of battery stack 10. First cover 41 has gas introduction port 47 opened at a position corresponding to gas discharge valve 1c of battery cell 1 constituting battery stack 10.

Second cover 42 is provided on the upper surface of first cover 41, and defines gas duct 38 with first cover 41. In gas duct 38, baffle plate 48 is formed between first cover 41 and second cover 42. Due to this, even if high-temperature, high-pressure gas GS is discharged from gas discharge valve 1c, gas GS is prevented from proceeding until gas GS is discharged toward the side surface of battery stack 10, the pressure is lowered, the temperature is lowered, and gas GS is safely discharged to the outside.

Furthermore, third cover 39 is provided on the upper surface of second cover 42, and abuts on the upper surface of second cover 42. Third cover 39 is made of metal. With such a configuration, even if high-temperature, high-pressure gas GS is discharged from gas discharge valve 1c, by reinforcing the upper surface of second cover 42 with metallic third cover 39, it is possible to suppress deformation of second cover 42, and avoid a situation in which an unintended gas discharge path avoiding a baffle plate 48 is formed.

As in power supply device 800 according to a comparative example shown in the schematic sectional view of Fig. 4, by providing a large number of baffle plates 48 in gas duct 38 and bending the gas discharge path so that so as to discharge gas GS along baffle plates 48, it becomes possible to reduce the momentum and also lower the temperature to safely discharge the gas to the outside.

However, when the pressure of gas GS to be discharged is high, as shown in the transverse sectional view of Fig. 5, as a result of gas duct 38 being deformed by the gas pressure, a gas discharge path avoiding baffle plate 48 is formed, and it is conceivable that gas GS is discharged to the outside of the power supply device at a high pressure and temperature. In particular, there has been a limit in resistance against deformation in a case where first cover 41 and second cover 42 constituting gas duct 38 are made of resin from the viewpoint of insulation and the like.

On the other hand, in power supply device 100 according to the present exemplary embodiment, by covering the upper surface of second cover 42 with metallic third cover 39 as shown in Fig. 3, it is possible to suppress deformation due to gas pressure.

Third cover 39 can also improve rigidity against swelling of the battery cell. Since battery cell 1 expands due to charging and discharging, such deformation is accumulated, and the overall length of battery stack 10 also changes. As shown in Fig. 2, end plate 20 is arranged on the end surface of battery stack 10 so as to oppose such a swelling force of battery stack 10, and end plates 20 are fastened to each other by fastening member 15 on the side surface of battery stack 10. By fixing third cover 39 to end plate 20, it is possible to improve the rigidity against the swelling force of the battery cell also on the upper surface of battery stack 10. On the other hand, first cover 41 and second cover 42 are made of resin that ensures insulation and facilitates formation of baffle plate 48 inside gas duct 38, and each cover is assigned with a different function and made of a material corresponding to the function assigned to each cover.

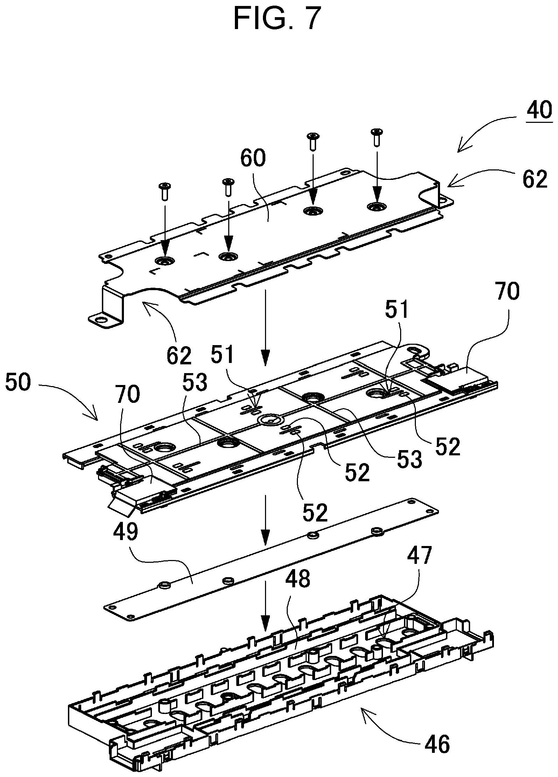

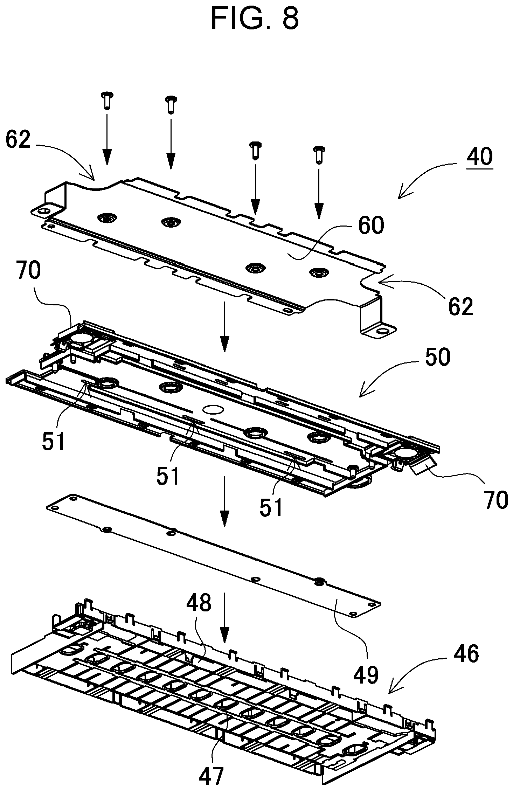

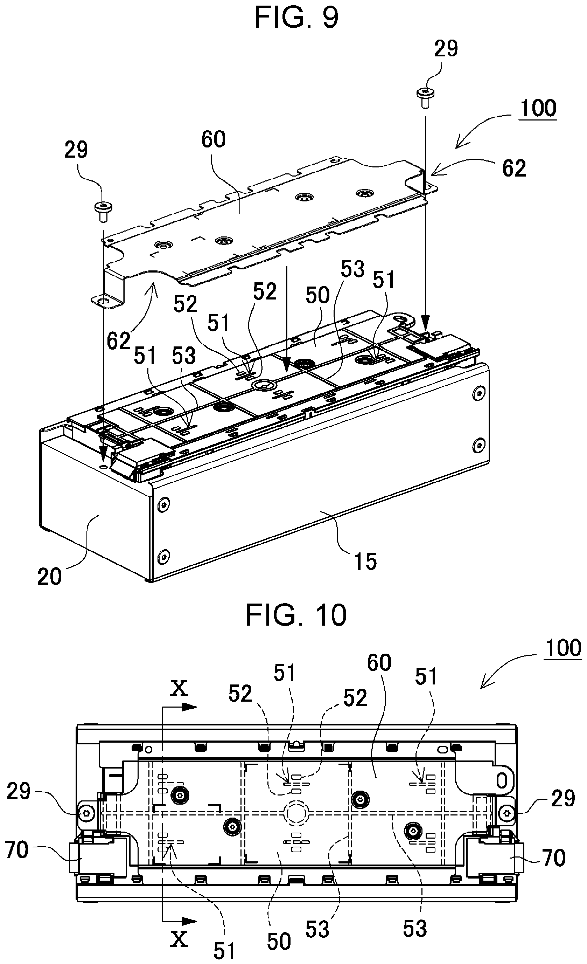

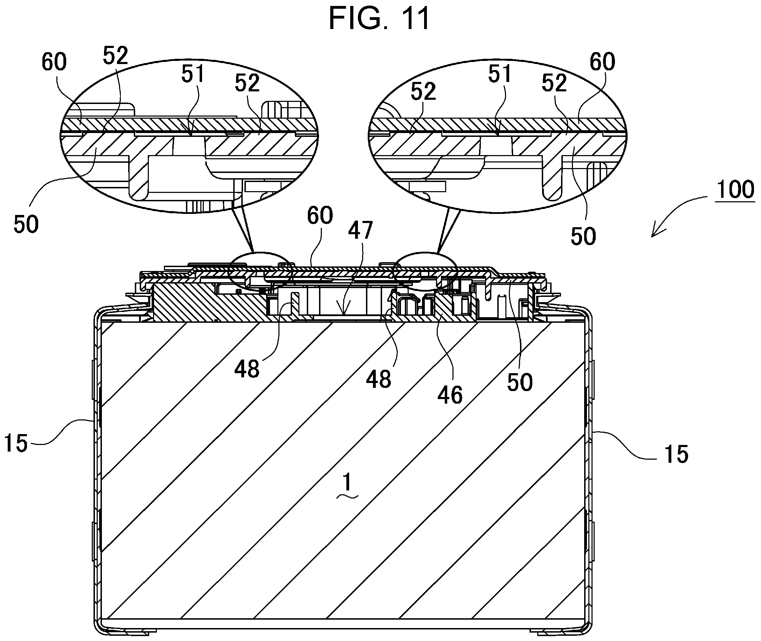

Hereinafter, a specific configuration of cover assembly 40 will be described with reference to Figs. 6 to 11. In these figures, Fig. 6 is an exploded perspective view showing a state in which reinforcement cover 60 is removed from cover assembly 40 of Fig. 2, Fig. 7 is an exploded perspective view of Fig. 6, Fig. 8 is an exploded perspective view of Fig. 7 as viewed obliquely from below, Fig. 9 is an exploded perspective view showing a state in which reinforcement cover 60 is removed from power supply device 100 of Fig. 1, Fig. 10 is a plan view of power supply device 100 of Fig. 1 with reinforcement cover 60 in a transparent state, and Fig. 11 is a sectional view with an enlarged view of a main part taken along line XI-XI in Fig. 10. Cover assembly 40 shown in these figures includes lower cover 46, upper cover 50, and reinforcement cover 60. The lower cover corresponds to first cover 41 described above, upper cover 50 corresponds to second cover 42, and reinforcement cover 60 corresponds to third cover 39.

### (Lower cover 46)

Lower cover 46 is provided on the upper surface of battery stack 10, and defines a first gas duct communicating with gas discharge valve 1c. As shown in Figs. 7 and 8, lower cover 46 has gas introduction port 47 opened at a position corresponding to gas discharge valve 1c of battery cell 1. As shown in Figs. 7, 8, 11, and the like, lower cover 46 has a large number of baffle plates 48, and by baffle plates 48 changing the travelling direction until the high-temperature, high-pressure gas is discharged, the momentum is reduced and the temperature is lowered. The gas discharge path is provided not only in the stack direction of battery cells 1 but also in a direction intersecting the stack direction. Lower cover 46 is made of resin having excellent insulation properties, for example, polycarbonate.

### (Intermediate plate 49)

The upper surface of lower cover 46 is provided with intermediate plate 49. Intermediate plate 49 is provided at the center in the width of battery stack 10, and is disposed so as to oppose gas discharge valve 1c. Intermediate plate 49 is made of a material excellent in strength, for example, metal. Due to this, even if a high-temperature, high-pressure gas is discharged from the gas discharge path, the gas is received by metallic intermediate plate 49 higher in strength than the resin cover, so that a situation in which the gas is directly ejected through power supply device 100 is avoided.

### (Upper cover 50)

Upper cover 50 is provided on the upper surface of lower cover 46, and defines a second gas duct on the upper surface of the first gas duct. Upper cover 50 is made of resin. A plurality of communication holes 51 through which the first gas duct and the second gas duct communicate with each other are formed on the upper surface of upper cover 50. Thus, by giving gas duct 38 a two-layer structure of the first gas duct and the second gas duct, even if gas is discharged from the battery cell, the gas is branched into the first gas duct and the second gas duct, and is discharged in a dispersed manner, so that it is possible to suppress a situation in which the gas discharged to the outside is ignited while avoiding the gas from staying inside the power supply device. By providing a plurality of exhaust ports for gas discharge, it is possible to reduce the sectional area per one, and it is possible to reduce the risk of ignition even in a case where a high-temperature gas is discharged.

### (Communication hole 51)

It is preferable that communication holes 51 are not opened corresponding to all the battery cells, but are discretely opened so as to serve the plurality of battery cells. In the example of Fig. 7 and the like, communication holes 51 are opened at three places in the stack direction with respect to battery stack 10 in which 12 battery cells 1 are stacked.

It is preferable that communication holes 51 are provided not at positions opposed to gas discharge valve 1c but at positions offset from gas discharge valve 1c. By not directly opening communication holes 51 with respect to gas discharge valve 1c, it is possible to easily disperse the gas. Gas discharge valve 1c is provided at the center of sealing plate 1b of battery cell 1 in the example shown in Fig. 2. On the other hand, as shown in Fig. 7 and the like, communication holes 51 are opened at positions corresponding to the right and left of sealing plate 1b of battery cell 1.

Communication hole 51 is preferably formed in a slit shape. The path area of the second gas duct can be set by adjusting the width and length of the slit, the height of the second gas duct, and the like, and the amount of gas to be discharged can be controlled. In the example of Fig. 11 and the like, the height of the second gas duct is defined by the height of communication rib 52 described later.

### (Communication rib 52)

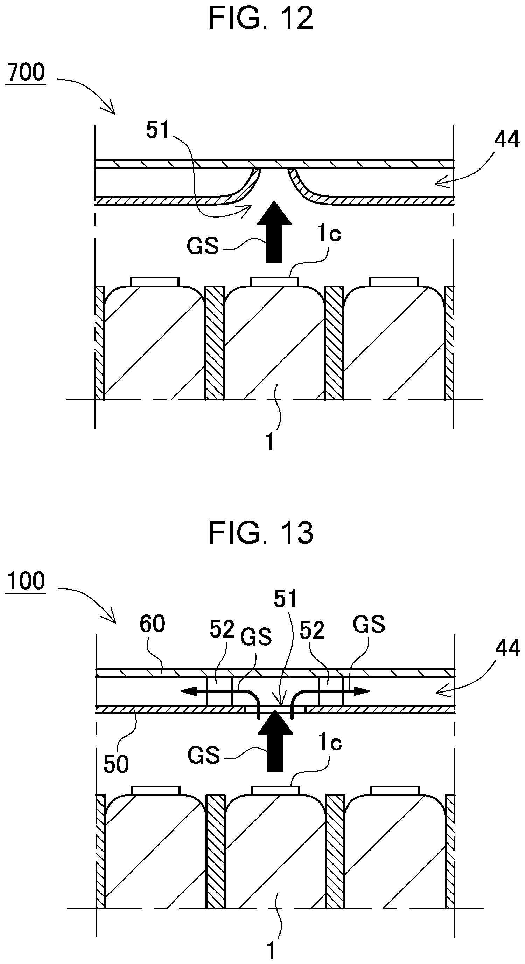

Upper cover 50 is provided with communication rib 52 protruding toward reinforcement cover 60 around communication hole 51. This makes it possible to block a situation in which the path for introducing gas into the second gas duct is obstructed. In a configuration provided with no communication rib, as in power supply device 700 shown in the schematic sectional view of Fig. 12, it is conceivable that when high pressure gas is discharged from gas discharge valve 1c, the periphery of communication hole 51 opened on upper cover 50 is deformed by the pressure of the gas, and the gas discharge path is closed. In this state, the gas is not guided to the second gas duct, and the gas cannot be dispersed and discharged through the second gas duct. On the other hand, as shown in the schematic sectional view of Fig. 13, by providing communication rib 52 around communication hole 51, it becomes possible to block deformation around communication hole 51, secure an opening end to the second gas duct, and guide the high-pressure gas to the second gas duct.

Communication rib 52 is provided on not the entirety but a part of circumference of communication hole 51 so as not to block inflow of the gas into the second gas duct. It is preferable that as shown in the plan view of Fig. 10, a pair of communication ribs 52 are provided so as to oppose both sides of communication hole 51. In a case of communication hole 51 in a slit shape, it is preferable to arrange the pair of communication ribs 52 so as to intersect with the long direction of the slit. In this example, communication rib 52 is integrally molded with resin upper cover 50. This configuration makes it possible to position and easily form communication rib 52 around communication hole 51. However, it is needless to say that the communication rib may be provided near the reinforcement cover side. In particular, by protruding the communication rib on the metallic reinforcement cover by punching or the like, it is possible to form a communication rib that is stronger and hardly deformed.

### (Partition rib 53)

Furthermore, upper cover 50 is provided with partition rib 53 that partitions between the plurality of communication holes 51 adjacent to each other. This makes it possible to partition the second gas duct for each communication hole 51, and to cause the high-pressure gas introduced into the second gas duct from communication hole 51 not to be discharged in a concentrated manner at one place.

In the example of Fig. 7 and the like, battery stack 10 in which 12 battery cells 1 are stacked is partitioned into three for every four cells, and further divided into two sections on the right and left of battery cell 1, so that battery stack 10 is divided into a total of six partitions. In the example of Fig. 7, the partition rib protrudes on the upper surface of upper cover 50, but the present invention is not limited to this configuration, and it goes without saying that the partition rib may protrude near the reinforcement cover, for example.

Furthermore, the gas discharge path is preferably provided not only in the stack direction of battery cells 1 but also in a direction intersecting the stack direction. By discharging the gas also in the intersecting direction in this manner, it is possible to efficiently discharge the gas to the outside of the power supply device and enhance safety. In the example of Fig. 10, a gas discharge path is formed in each of the first gas duct and the second gas duct so that gas is discharged also in the up-down direction in the figure.

### (Reinforcement cover 60)

Reinforcement cover 60 is provided on the upper surface of upper cover 50. The second gas duct is formed between reinforcement cover 60 and upper cover 50. Reinforcement cover 60 abuts on the upper surface of upper cover 50 via communication rib 52. With such a configuration, even if a high-temperature, high-pressure gas is discharged from gas discharge valve 1c, deformation of upper cover 50 can be suppressed by reinforcing the upper surface of upper cover 50 with metal reinforcement. In particular, when upper cover 50 is deformed, there is a possibility that an unintended gas discharge path avoiding baffle plate 48 is formed, but such a situation can be avoided by blocking upper cover 50 from deforming with reinforcement cover 60.

Reinforcement cover 60 is fixed to the upper surface of end plate 20 with bolt 29 or the like as shown in Fig. 8. This makes it possible to, in addition to fastening the side surface of battery stack 10 by fastening member 15, fasten also the upper surface of battery stack 10 by reinforcement cover 60, and increase the rigidity of pressing the end surface of battery stack 10 by end plate 20. In other words, reinforcement cover 60 is used also as an additional fastening member.

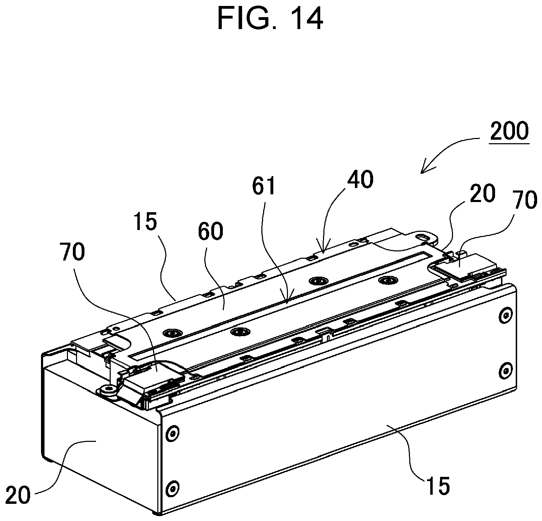

Reinforcement cover 60 may form bead 61 in order to increase rigidity. In power supply device 200 according to the second exemplary embodiment shown in the perspective view of Fig. 14, bead 61 is formed at the center in the long direction of reinforcement cover 60. The strength can be improved by simple processing of forming bead 61 on metal sheet reinforcement cover 60 in this manner.

### (Total terminal strip 70)

As described above, electrode terminals 2 of each battery cell 1 constituting battery stack 10 are connected to each other by the bus bar. The power supply device includes total terminal strip 70 that draws a total output of the plurality of battery cells 1 connected in series and in parallel via the bus bar. Total terminal strip 70 is made of a metal sheet excellent in conductivity. In order to insulate metallic reinforcement cover 60 and total terminal strip 70 from each other, total terminal strip 70 is exposed from reinforcement cover 60 as shown in Figs. 7 and 8. Therefore, reinforcement cover 60 forms exposure part 62 that exposes total terminal strip 70. This makes it possible to secure the insulating distance by separating, while using, metallic reinforcement cover 60 from total terminal strips 70 also made of metal, and possible to avoid the possibility of occurrence of an unintended short circuit.

Exposure part 62 can be an exposed cutout in which corner parts of reinforcement cover 60 are cut out so as to expose total terminal strip 70 as shown in Fig. 7 and the like. This enhances the safety by separating metallic reinforcement cover 60 and total terminal strip 70 in the horizontal plane so as not to overlap each other. Alternatively, exposure part 62 may be an exposure window that exposes the total terminal strip.

In the example of Fig. 9 and the like, total terminal strip 70 is provided on one side surface (lower side in the figure) of the upper surface of end plate 20. Exposure part 62 may be formed only at the lower corner of the end of reinforcement cover 60 accordingly, or may be provided on both sides of the end as shown in Fig. 9 and the like. This makes it possible to attach reinforcement cover 60 even if the reinforcement cover is turned in the right-left direction, and the assembling workability is improved.

Power supply device 100 described above can be used as a power source for a vehicle that supplies electric power to a motor that causes an electric vehicle to travel. As an electric vehicle equipped with power supply device 100, electric vehicles such as a hybrid vehicle and a plug-in hybrid vehicle that travel with both an engine and a motor, or an electric car that travels only with a motor can be used, and the power supply device is used as a power source for these vehicles. An example will be described in which a large-capacity, high-output power supply device where a large number of power supply devices 100 described above are connected in series or in parallel in order to obtain electric power for driving an electric vehicle and a necessary controlling circuit is further added is constructed.

### (Power supply device for hybrid vehicle)

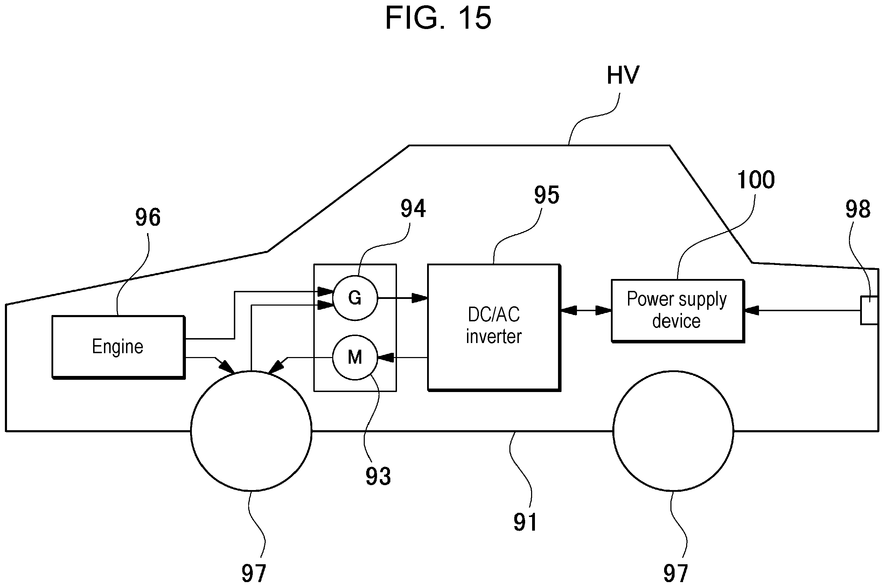

Fig. 15 shows an example in which power supply device 100 is equipped on a hybrid vehicle that travels with both an engine and a motor. Vehicle HV equipped with power supply device 100 shown in this figure includes vehicle body 91, engine 96 and motor for travelling 93 that cause vehicle body 91 to travel, wheels 97 driven by engine 96 and motor for travelling 93, power supply device 100 that supplies electric power to motor 93, and generator 94 that charges the battery of power supply device 100. Power supply device 100 is connected to motor 93 and generator 94 via DC/AC inverter 95. Vehicle HV travels with both motor 93 and engine 96 while charging and discharging the battery of power supply device 100. Motor 93 is driven in a region where engine efficiency is low, for example, during acceleration or low-speed travelling, and causes the vehicle to travel. Motor 93 is driven by electric power supplied from power supply device 100. Generator 94 is driven by engine 96 or driven by regenerative braking when the vehicle is braked, and charges the battery of power supply device 100. As shown in Fig. 15, vehicle HV may include charging plug 98 for charging power supply device 100. By connecting charging plug 98 to an external power source, it is possible to charge power supply device 100.

### (Power supply device for electric car)

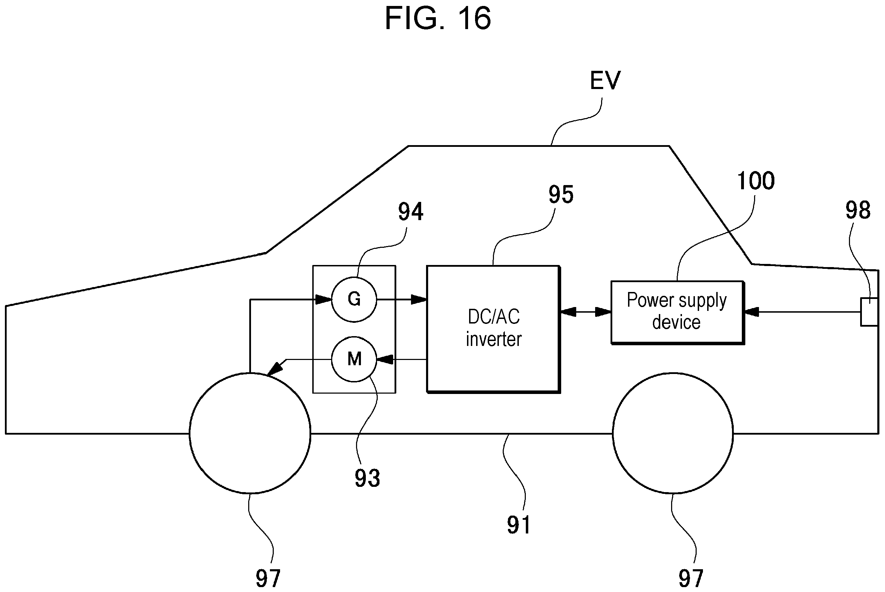

Fig. 16 shows an example in which power supply device 100 is equipped on an electric car that travels only with a motor. Vehicle EV equipped with power supply device 100 shown in this figure includes vehicle body 91, motor for travelling 93 that causes vehicle body 91 to travel, wheels 97 that are driven by motor 93, power supply device 100 that supplies electric power to motor 93, and generator 94 that charges the battery of power supply device 100. Power supply device 100 is connected to motor 93 and generator 94 via DC/AC inverter 95. Motor 93 is driven by electric power supplied from power supply device 100. Generator 94 is driven by the energy at the time of applying regenerative braking to vehicle EV, and charges the battery of power supply device 100. Vehicle EV includes charging plug 98, and power supply device 100 can be charged by connecting charging plug 98 to an external power source.

### (Power supply device for electrical storage device)

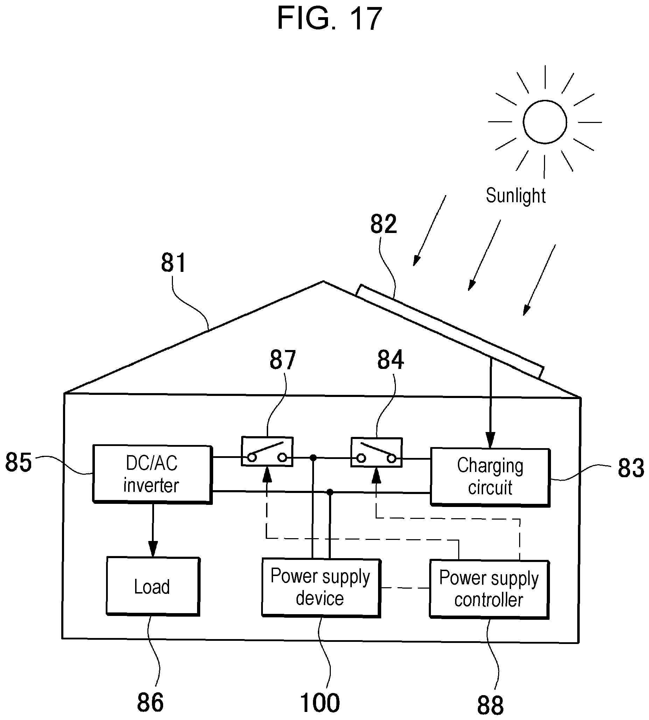

Furthermore, the present invention does not limit the application of the power supply device to a power source for a motor that causes a vehicle to travel. The power supply device according to the exemplary embodiments can also be used as a power source for an electrical storage device that stores electricity by charging a battery with electric power generated by photovoltaic power generation, wind power generation, and the like. Fig. 17 shows an electrical storage device that stores electricity by charging the battery of power supply device 100 with solar battery 82.

The electrical storage device shown in Fig. 17 charges the batteries of power supply device 100 with electric power generated by solar battery 82 that is disposed on a roof or a rooftop of building 81 such as a house or a factory. This electrical storage device charges the battery of power supply device 100 at charging circuit 83 with solar battery 82 as a charging power source, and then supplies electric power to load 86 via DC/AC inverter 85. Thus, this electrical storage device includes a charge mode and a discharge mode. In the electrical storage device shown in the figure, DC/AC inverter 85 and charging circuit 83 are connected to power supply device 100 via discharging switch 87 and charging switch 84, respectively. On/off of discharging switch 87 and charging switch 84 is switched by power supply controller 88 of the electrical storage device. In the charge mode, power supply controller 88 turns on charging switch 84 and turns off discharging switch 87 to allow charging from charging circuit 83 to power supply device 100. When charging is completed and the battery is fully charged or in a state where a capacity of a predetermined value or more is charged, power supply controller 88 turns off charging switch 84 and turns on discharging switch 87 to switch the mode to the discharge mode and allows discharging from power supply device 100 to load 86. Where necessary, supply of electric power to load 86 and charging of power supply device 100 can be simultaneously carried out by turning on charging switch 84 and turning on discharging switch 87.

Although not illustrated, the power supply device can also be used as a power source for an electrical storage device that stores electricity by charging a battery using midnight electric power at night. The power supply device that is charged with midnight electric power is charged with the midnight electric power that is surplus electric power generated by a power station, and outputs the electric power during the daytime when an electric power load increases, which can limit peak electric power during the daytime to a small value. The power supply device can also be used as a power source charged with both output of a solar battery and the midnight electric power. Effectively using both electric power generated by the solar battery and the midnight electric power, this power supply device can efficiently perform power storage in consideration of weather and electric power consumption.

The power storage system as described above can be suitably used in applications including a backup power supply device that can be equipped on a computer server rack, a backup power supply device for wireless base stations for cellular phones and the like, an electrical storage device combined with a solar battery such as a power storage power source for homes and factories or a power source for street lights, and a backup power source for traffic lights and traffic indicators on roads.

### INDUSTRIAL APPLICABILITY

The power supply device according to the present invention, the vehicle and the electrical storage device equipped with power supply device can be suitably used as a large current power supply used for a power source of a motor that drives electric vehicles such as a hybrid vehicle, a fuel cell vehicle, an electric car, or an electric motorcycle. Examples include a power supply device for a plug-in hybrid electric car and a hybrid electric car that can switch between an EV travelling mode and an HEV travelling mode, an electric car, and the like. The power supply device according to the present invention, the vehicle and the electrical storage device equipped with power supply device can also be appropriately used for applications including a backup power supply device that can be equipped on a computer sever rack, a backup power supply device for wireless base stations of cellular phones and the like, an electrical storage device combined with a solar battery such as a power storage power source for homes and for factories and a power source for street lights, and a backup power source for traffic lights.

### REFERENCE MARKS IN THE DRAWINGS

100, 200, 700, 800: power supply device
1: battery cell
1X: terminal surface
1a: outer covering can
1b: sealing plate
1c: gas discharge valve
2: electrode terminal
10: battery stack
15: fastening member
15a: fastening main surface
15d: bent piece
15f: bolt
16: insulating spacer
17: end surface spacer
20: end plate
29: bolt
30: insulating sheet
31: flat plate
32: bent covered part
38: gas duct
39: third cover
40: cover assembly
41: first cover
42: second cover
46: lower cover
47: gas introduction port
48: baffle plate
49: intermediate plate
50: upper cover
51: communication hole
52: communication rib
53: partition rib
60: reinforcement cover
61: bead
62: exposure part
70: total terminal strip
81: building
82: solar battery
83: charging circuit
84: charging switch
85: DC/AC inverter
86: load
87: discharging switch
88: power supply controller
91: vehicle body
93: motor
94: generator
95: DC/AC inverter
96: engine
97: wheel
98: charging plug
GS: gas
HV, EV: vehicle

## Claims

1. A power supply device (100, 200) comprising:
a battery stack (10) in which battery cells (1) are stacked, each of battery cells (1) including a gas discharge valve (1c) that opens when an internal pressure of an outer covering can (1a) rises and an electrode disposed on an upper surface;
a first cover (41) that is provided on an upper surface of the battery stack (10) and opens at a position corresponding to the gas discharge valve (1c) of each of the battery cells (1); and
a second cover (42) that is provided above an upper surface of the first cover (41) and defines a gas duct (38) between the first cover (41) and the second cover (42),
wherein the gas duct (38) includes a baffle plate (48) between the first cover (41) and a second cover (42), wherein the baffle plate (48) is configured to bend the gas discharge path in the gas duct (38), to reduce the momentum and to lower the temperature to safely discharge the gas to the outside, and
the power supply device (100, 200) further comprises
a third cover (39) that is provided on an upper surface of the second cover (42) and abuts on an upper surface of the second cover (42), third cover (39) being made of metal.

2. The power supply device (100, 200) according to Claim 1, further comprising an end plate (20) that covers a side surface of the battery stack (10),
wherein the third cover (39) is fixed to the end plate (20).

3. The power supply device (100, 200) according to Claim 2, further comprising
end plates (20) each being the end plate (20), the end plates (20) covering opposite side surfaces of the battery stack (10), the opposite side surfaces including the side surface,
the battery stack (10) includes a pair of fastening members (15) that fasten the end plates (20) to each other on the opposite side surfaces, and
the battery stack (10) fastens the battery cells (1) by the pair of fastening members (15) and the third cover (39) on the upper surface of the second cover (42).

4. The power supply device (100, 200) according to any one of Claims 1 to 3, further comprising:
a bus bar that connects electrodes of the battery cells (1) constituting the battery stack (10); and
a total terminal strip (70) that is connected to the bus bar,
wherein the third cover (39) includes an exposure part (62) that exposes the total terminal strip (70).

5. The power supply device (100, 200) according to any one of Claims 1 to 4, wherein the third cover (39) includes a bead (61) for increasing rigidity and improving strength.

6. The power supply device (100, 200) according to any one of Claims 1 to 5, wherein the first cover (41) and the second cover (42) are made of resin.

7. A vehicle comprising the power supply device (100, 200) according to any one of Claims 1 to 6, the vehicle comprising:
the power supply device (100, 200);
a motor (93) for travelling to which the power supply device (100, 200) supplies electric power;
a vehicle body (91) equipped with the power supply device (100, 200) and the motor (93); and
a wheel (97) driven by the motor (93) to cause the vehicle body (91) to travel.

8. An electrical storage device comprising the power supply device (100, 200) according to any one of Claims 1 to 6, the electrical storage device comprising:
the power supply device (100, 200); and
a power supply controller (88) that controls charging and discharging of the power supply device (100, 200),
wherein the power supply controller (88) enables charging of the plurality of battery cells (1) with electric power from outside, and controls charging to be performed on the plurality of battery cells (1).

## Patentansprüche

1. Stromversorgungsvorrichtung (100, 200), die Folgendes umfasst:
einen Batteriestapel (10), in dem Batteriezellen (1) gestapelt sind, wobei jede von Batteriezellen (1) ein Gasaustrittsventil (1c), das sich öffnet, wenn ein Innendruck einer äußeren Abdeckungsbüchse (1a) ansteigt, und eine Elektrode, die auf einer oberen Fläche angeordnet ist, beinhaltet;
eine erste Abdeckung (41), die auf einer oberen Fläche des Batteriestapels (10) bereitgestellt ist und sich in einer Position öffnet, die dem Gasaustrittsventil (1c) von jeder der Batteriezellen (1) entspricht; und
eine zweite Abdeckung (42), die über einer oberen Fläche der ersten Abdeckung (41) bereitgestellt ist und zwischen der ersten Abdeckung (41) und der zweiten Abdeckung (42) einen Gaskanal (38) definiert,
wobei der Gaskanal (38) zwischen der ersten Abdeckung (41) und einer zweiten Abdeckung (42) eine Schwallplatte (48) beinhaltet, wobei die Schwallplatte (48) dazu ausgelegt ist, den Gasaustrittspfad im Gaskanal (38) zu biegen, um das Moment zu reduzieren und die Temperatur zu senken, um das Gas sicher nach außen austreten zu lassen, und
die Stromversorgungsvorrichtung (100, 200) umfasst ferner Folgendes
eine dritte Abdeckung (39), die auf einer oberen Fläche der zweiten Abdeckung (42) bereitgestellt ist und an einer oberen Fläche der zweiten Abdeckung (42) anliegt, wobei die dritte Abdeckung (39) aus einem Metall besteht.

2. Stromversorgungsvorrichtung (100, 200) nach Anspruch 1, die ferner eine Endplatte (20) umfasst, die eine Seitenfläche des Batteriestapels (10) abdeckt,
wobei die dritte Abdeckung (39) an der Endplatte (20) fixiert ist.

3. Stromversorgungsvorrichtung (100, 200) nach Anspruch 2, die ferner Folgendes umfasst
Endplatten (20), von denen jede die Endplatte (20) ist, wobei die Endplatten (20) gegenüberliegende Seitenflächen des Batteriestapels (10) abdecken, wobei die gegenüberliegenden Seitenflächen die Seitenfläche beinhalten,
der Batteriestapel (10) beinhaltet ein Paar von Befestigungselementen (15), die die Endplatten (20) auf den gegenüberliegenden Seitenflächen aneinander befestigen, und
der Batteriestapel (10) befestigt die Batteriezellen (1) mit dem Paar von Befestigungselementen (15) und der dritten Abdeckung (39) auf der oberen Fläche der zweiten Abdeckung (42).

4. Stromversorgungsvorrichtung (100, 200) nach einem der Ansprüche 1 bis 3, die ferner Folgendes umfasst:
eine Sammelschiene, die Elektroden der Batteriezellen (1), die den Batteriestapel (10) konstituieren, verbindet; und
eine Gesamtklemmleiste (70), die mit der Sammelschiene verbunden ist,
wobei die dritte Abdeckung (39) ein Freilegungsteil (62) beinhaltet, das die Gesamtklemmleiste (70) freigelegt.

5. Stromversorgungsvorrichtung (100, 200) nach einem der Ansprüche 1 bis 4, wobei die dritte Abdeckung (39) zum Erhöhen einer Steifigkeit und Verbessern einer Festigkeit einen Wulst (61) beinhaltet.

6. Stromversorgungsvorrichtung (100, 200) nach einem der Ansprüche 1 bis 5, wobei die erste Abdeckung (41) und die zweite Abdeckung (42) aus Harz bestehen.

7. Fahrzeug, das die Stromversorgungsvorrichtung (100, 200) nach einem der Ansprüche 1 bis 6 umfasst, wobei das Fahrzeug Folgendes umfasst:
die Stromversorgungsvorrichtung (100, 200);
einen Motor (93) zum Fahren, dem die Stromversorgungsvorrichtung (100, 200) elektrischen Strom zuführt;
einen Fahrzeugkörper (91), der mit der Stromversorgungsvorrichtung (100, 200) und dem Motor (93) ausgerüstet ist; und
ein Rad (97), das vom Motor (93) angetrieben wird, um den Fahrzeugkörper (91) zum Fahren zu veranlassen.

8. Elektrische Speichervorrichtung, die die Stromversorgungsvorrichtung (100, 200) nach einem der Ansprüche 1 bis 6 umfasst, wobei die elektrische Speichervorrichtung Folgendes umfasst:
die Stromversorgungsvorrichtung (100, 200); und
eine Stromversorgungssteuerung (88), die das Laden und Entladen der Stromversorgungsvorrichtung (100, 200) steuert,
wobei die Stromversorgungssteuerung (88) das Laden der Vielzahl von Batteriezellen (1) von außen mit elektrischem Strom ermöglicht und das Durchführen des Ladens der Vielzahl von Batteriezellen (1) steuert.

## Revendications

1. Dispositif d'alimentation électrique (100, 200) comprenant :
un empilement de batteries (10) dans lequel des éléments de batterie (1) sont empilés, chacun des éléments de batterie (1) comprenant une valve de décharge de gaz (1c) qui s'ouvre lorsqu'une pression interne d'une boîte de recouvrement externe (1a) monte et une électrode disposée sur une surface supérieure ;
un premier couvercle (41) qui est prévu sur une surface supérieure de l'empilement de batteries (10) et s'ouvre dans une position correspondant à la valve de décharge de gaz (1c) de chacun des éléments de batterie (1) ; et
un deuxième couvercle (42) qui est prévu au-dessus d'une surface supérieure du premier couvercle (41) et définit un conduit de gaz (38) entre le premier couvercle (41) et le deuxième couvercle (42),
dans lequel le conduit de gaz (38) comprend une plaque de déflecteur (48) entre le premier couvercle (41) et un deuxième couvercle (42), dans lequel la plaque de déflecteur (48) est configurée pour courber la trajectoire de décharge de gaz dans le conduit de gaz (38), afin de réduire le moment et d'abaisser la température afin de décharger le gaz en toute sécurité à l'extérieur, et
le dispositif d'alimentation électrique (100, 200) comprend en outre :
un troisième couvercle (39) qui est prévu sur une surface supérieure du deuxième couvercle (42) et vient en butée sur une surface supérieure du deuxième couvercle (42), le troisième couvercle (39) étant réalisé avec un métal.

2. Dispositif d'alimentation électrique (100, 200) selon la revendication 1, comprenant en outre une plaque d'extrémité (20) qui recouvre une surface latérale de l'empilement de batteries (10),
dans lequel le troisième couvercle (39) est fixé sur la plaque d'extrémité (20).

3. Dispositif d'alimentation électrique (100, 200) selon la revendication 2, comprenant en outre :
des plaques d'extrémité (20), chacune étant la plaque d'extrémité (20), les plaques d'extrémité (20) recouvrant les surfaces latérales opposées de l'empilement de batteries (10), les surfaces latérales opposées comprenant la surface latérale,
l'empilement de batteries (10) comprend une paire d'éléments de fixation (15) qui fixe les plaques d'extrémité (20) entre elles sur les surfaces latérales opposées, et
l'empilement de batteries (10) fixe les éléments de batterie (1) grâce à la paire d'éléments de fixation (15) et le troisième couvercle (39) sur la surface supérieure du deuxième couvercle (42).

4. Dispositif d'alimentation électrique (100, 200) selon l'une quelconque des revendications 1 à 3, comprenant en outre :
une barre omnibus qui raccorde les électrodes des éléments de batterie (1) constituant l'empilement de batteries (10) ; et
une barrette de connexion totale (70) qui est raccordée à la barre omnibus,
dans lequel le troisième couvercle (39) comprend une partie d'exposition (62) qui expose la barrette de connexion totale (70) .

5. Dispositif d'alimentation électrique (100, 200) selon l'une quelconque des revendications 1 à 4, dans lequel le troisième couvercle (39) comprend un cordon de soudure (61) pour augmenter la rigidité et améliorer la résistance.

6. Dispositif d'alimentation électrique (100, 200) selon l'une quelconque des revendications 1 à 5, dans lequel le premier couvercle (41) et le deuxième couvercle (42) sont réalisés à partir de résine.

7. Véhicule comprenant le dispositif d'alimentation électrique (100, 200) selon l'une quelconque des revendications 1 à 6, le véhicule comprenant :
le dispositif d'alimentation électrique (100, 200) ;
un moteur (93) pour le déplacement, auquel le dispositif d'alimentation électrique (100, 200) fournit l'alimentation électrique ;
un corps de véhicule (91) équipé du dispositif d'alimentation électrique (100, 200) et du moteur (93) ; et
une roue (97) entraînée par le moteur (93) pour amener le corps de véhicule (91) à se déplacer.

8. Dispositif de stockage électrique comprenant le dispositif d'alimentation électrique (100, 200) selon l'une quelconque des revendications 1 à 6, le dispositif de stockage électrique comprenant :
le dispositif d'alimentation électrique (100, 200) ; et
un organe de commande d'alimentation électrique (88) qui commande la charge et la décharge du dispositif d'alimentation électrique (100, 200),
dans lequel l'organe de commande d'alimentation électrique (88) permet de charger la pluralité d'éléments de batterie (1) avec l'énergie électrique de l'extérieur et commande la charge à réaliser sur la pluralité d'éléments de batterie (1).
